# EUROPÄISCHE PATENTANMELDUNG

(11) **EP 1 225 525 A1**
(43) Veröffentlichungstag der Anmeldung: **24.07.2002**
(21) Anmeldenummer: 01100728.3
(22) Anmeldetag: 12.01.2001
(51) Int. Cl.: G06F 17/60, H04L 12/24

(54) **Verfahren zum Darstellen von Netzdaten eines Telekommunikationsnetzes**

(71) Anmelder: Maraite, Frank, 41812 Erkelenz (DE); Kemman, Hans Joachim, 42553 Velbert (DE)
(72) Erfinder: Maraite, Frank, 41812 Erkelenz (DE); Kemman, Hans Joachim, 42553 Velbert (DE)
(74) Vertreter: Cohausz & Florack

(57) **Zusammenfassung**

Das Verfahren kann dazu verwendet werden, um ein Telekommunikationsnetz in seinen technischen und nichttechnischen, geographischen und nichtgeographischen Daten in beliebiger Weise darstellen zu können. Die Anwendung kann dabei sowohl in der Planung, im Vertrieb als auch im Service liegen. Somit können in jedem Zeitpunkt der Netzaufbauphase und Anwendung des Netzwerkers die komplexen Informationen zum Netzwerk anschaulich aufbereitet werden.

## Beschreibung

Die Erfindung betrifft Verfahren zum Darstellen von Netzdaten eines Telekommuniaktionsnetzes.

Aus dem Stand der Technik ist bekannt, daß Personen, die das Telekommunikationsnetzwerk planen, bedienen und warten, mit Hilfe von Netzwerkdaten, bspw. in Form unterschiedlicher Tabellenformate, das Netzwerk nur in unübersichtlicher Form erfassen können. Es gibt zwar Kartenmaterial zum eigentlichen Netzwerk, das jedoch nicht die einzelnen Netzinformationen, also Netzdaten nach beliebigen Auswahlkriterien darstellen kann. Daher ist der Benutzer der Dateninformationen jeweils nur auf vorgewählte Informationsdarstellungen beschränkt.

Der Erfindung liegt daher das technische Problem zugrunde, die Netzdaten eines Telekommunikationsnetzes graphisch nach benutzerdefinierten Vorgaben darzustellen, um beliebige, an verschiedene Aufgabensituationen angepaßte Darstellungen des Netzes zu erzeugen.

Das zuvor aufgezeigte technische Problem wird erfindungsgemäß durch ein Verfahren mit den Merkmalen des Anspruches 1 gelöst. Vorteilhafte Ausgestaltungen sind in den Unteransprüchen dargestellt.

Das erfindungsgemäße Verfahren kann dazu verwendet werden, um ein Telekommunikationsnetz in seinen technischen und nichttechnischen, geographischen und nichtgeographischen Daten in beliebiger Weise darstellen zu können. Die Anwendung kann dabei sowohl in der Planung, im Vertrieb als auch im Service liegen. Somit können in jedem Zeitpunkt der Netzaufbauphase und Anwendung des Netzwerkes die komplexen Informationen zum Netzwerk anschaulich aufbereitet werden.

So kann ein Störungsmanagement aufgebaut werden, da ausgehend von einer bekannten Störungsquelle anhand der geographischen Darstellung der Installation des Netzwerkes und seiner technischen Elemente die Fehlersuche vereinfacht und somit schneller durchgeführt werden kann.

Ebenso können die graphischen Darstellungen dafür genutzt werden, um im Bereich des Marketing besser bestimmte geographische Auslastungen des Telekommunikationsnetzes erfassen und analysieren zu können. So können bei Bedarf bestimmte geographische Bereiche intensiver beworben werden. Ebenso läßt sich bei einer neuen Kundenanfrage schneller erfassen, ob diese durch das Netzwerk erfüllt werden kann oder nicht.

Bei einer bevorzugten Ausgestaltung des erfindungsgemäßen Verfahrens werden zum Auffinden des interessierenden geographischen Bereiches die Adressinformationen der Teilnehmer des Telekommunikationsnetzes ausgewertet, um in den Kartendaten den geeigneten Bereich herauszufinden. Dabei wird weiter bevorzugt eine Übersetzungstabelle verwendet, um unterschiedlich normierte Straßeninformationen zu vergleichen. So kann beispielsweise ein Straßenname die Endung "str." oder "straße" aufweisen, die in Übereinstimmung miteinander gebracht werden müssen. Daher weist die Übersetzungstabelle eine Konkordanzliste für synonyme Buchstabenreihen auf.

Die vorliegende Erfindung betrifft neben dem Verfahren zum Darstellen von Netzdaten eines Telekommuniaktionsnetzes auch ein EDV-System zur Verwirklichung dieses Verfahrens, das in der nachfolgenden Beschreibung eines Ausführungsbeispieles näher erläutert wird. Ebenso betrifft die Erfindung ein Computerprogramm mit Programmbefehlen für ein EDV-System zur Verwirklichung dieses Verfahrens, die zudem auf einem maschinenlesbaren Medium gespeichert sein können. Somit soll neben dem erfindungsgemäßen Verfahren auch Schutz für ein entsprechendes EDV-System und ein entsprechendes Computer-Programm erlangt werden.

Im folgenden wird die Erfindung anhand von Ausführungsbeispielen näher erläutert, wobei auf die beigefügte Zeichnung Bezug genommen wird. In der Zeichnung zeigen
- Fig. 1-6: Beispiele von durch das erfindungsgemäße Verfahren erzeugten graphischen Darstellungen und
- Fig. 7: den Aufbau eines Ausführungsbeispiels eines EDV-- Systems zur Durchführung des Verfahrens.

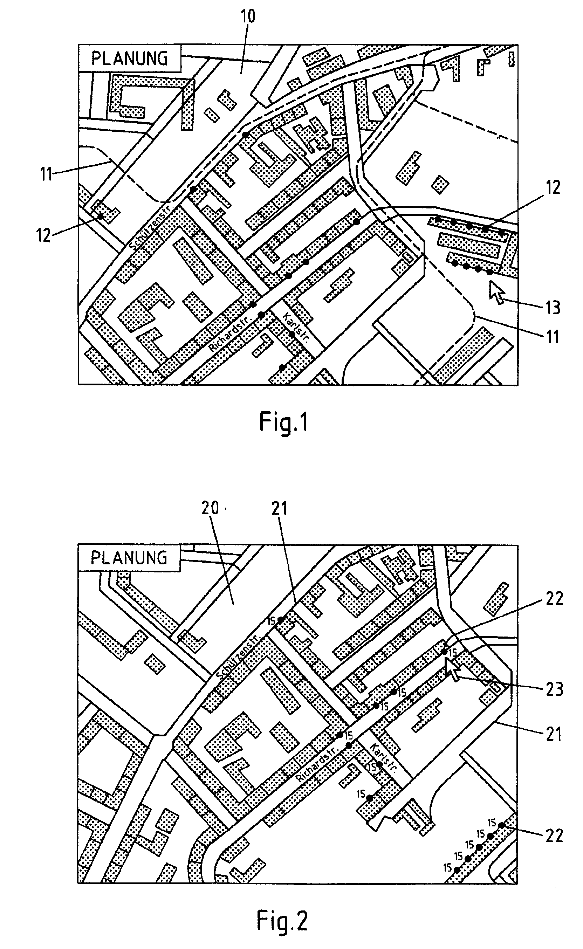

In den Fig. 1 bis 6 sind verschiedene graphische Darstellungen gezeigt, die einen Teil des Inhaltes eines Computerbildschirms oder die entsprechende gedruckte Wiedergabe darstellen. Wie links oben in allen Figuren angezeigt ist, handelt es sich um Darstellungen zu verschiedenen Themenbereichen wie Planung, Vertrieb und Service. Somit wird deutlich, daß das erfindungsgemäße Verfahren für unterschiedliche Anforderungen geeignet ist, jeweils die Informationen darzustellen, die gefordert sind, wobei jeweils wichtige und unwichtige Informationen dargestellt bzw. nicht dargestellt werden.

Die Fig. 1 und 2 zeigen für das Beispiel einer Planungsphase des Telekommunikationsnetzes. In den dargestellten Kartenausschnitten 10 und 20 sind geographische Informationen angezeigt, nämlich Straßenverläufe und Bebauung. Durch Linien 11 und 21 sind Leitungen des Netzes dargestellt, die entweder bereits verwirklicht sind oder sich noch in der Planung befinden. An mit Symbolen 12 und 22 dargestellten Orten werden durch das Netzwerk zu erreichende Orte angezeigt, so daß ein geeignetes Leitungsnetz geplant werden kann. Wird durch den dargestellten Mauszeiger 13 bzw. 23 ein Symbol 12 bzw. 22 aktiviert, so werden die bisher nicht dargestellten nichtgeographischen Daten dargestellt. Diese können technischer Natur oder teilnehmerbezogen sein. Teilnehmerbezogene Daten können die Anzahl der Anschlüsse pro Standort oder die dort erforderlichen Datenübertragungskapazitäten sein.

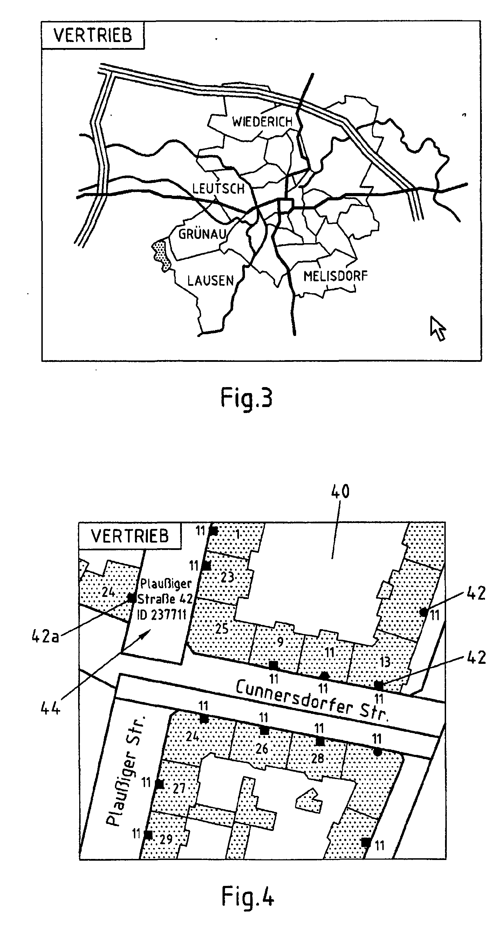

Die Fig. 3 und 4 zeigen die Anwendung des Verfahrens im Bereich Vertrieb des Telekommunikationsnetzes. In der in Fig, 3 dargesetllten geographischen Übersicht werden kumulierte Informationen wie Durchschnittswerte dargesetllt. In Fig, 4 sind dagegen in dem dargestellten Kartenausschnitt 40 wenige Straßen und die zugehörige Bebauung dargestellt. Des weiteren sind im Bereich der Symbole 42 die Hausnummern der einzelnen Adressen dargestellt. Die unterschiedlichen Symbole charakterisieren dabei unterschiedliche Ausbildungen des Telekommunikationsnetzes. Beispielsweise können runde Symbole einen Teilnehmer des Telekommunikationsnetzes darstellen, während eckige Symbole Teilnehmer eines anderen Netzes, bspw. eines Konkurrenten, darstellen. Im geographischen Bereich, der durch den Pfeil 44 in Fig. 4 angezeigt wird, werden zu der Adresse "Plaußiger Straße 24" durch Aktivieren des der Adresse zugeordneten Symbols 42a mit Hilfe des nicht dargestellten Mauszeigers zusätzlich Informationen angezeigt, nämlich eine technische Information "ID 237711", die ein bestimmtes technisches Element des Netzwerkes charakterisiert.

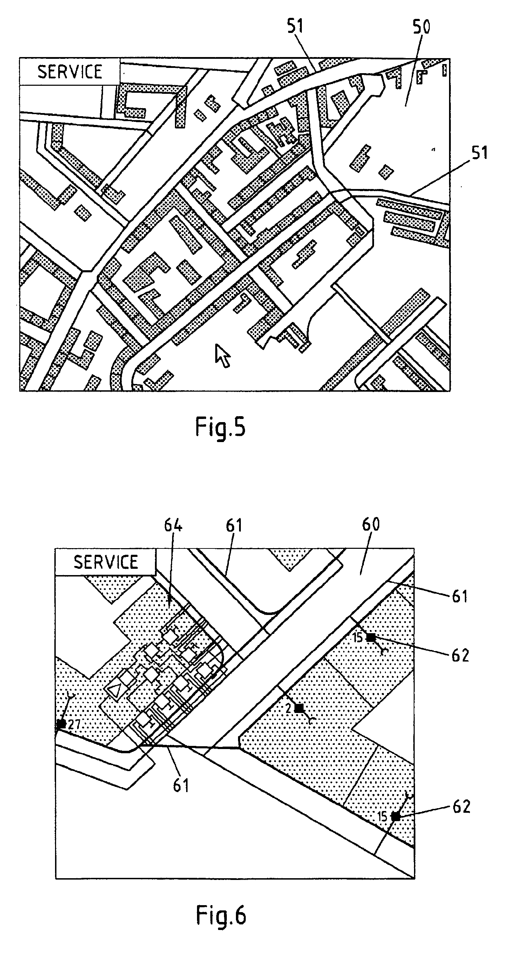

Die Fig. 5 und 6 zeigen die Anwendung des Verfahrens für den Bereich des Services. Es kann ein sogenanntes Störungsmanagement betrieben werden, wobei zu einer bekannten Störungsstelle die notwendigen technischen Daten angezeigt werden, die für die im Service und Reparatur arbeitenden Personen wichtig sind. In den Kartenausschnitten 50 und 60 sind jeweils geographische Informationen angezeigt, nämlich Straßenverläufe und Bebauung. Durch Linien 51 und 61 sind Leitungen des betriebenen Netzes dargestellt. An mit Symbolen 62 in Fig. 6 gekennzeichneten Orten werden durch das Netzwerk zu erreichende Orte angezeigt.

Aufgrund des größeren Maßstabes sind in Fig. 5 derartige Symbole nicht dargestellt. Daher ist in Fig. 5 der Netzverlauf übersichtlich dargestellt, so daß bestimmte Zweige oder Schleifen des Netzwerkes festgelegt werden können, in denen sich eine Störung befindet.

Wird durch einen in Fig. 6 nicht dargestellten Mauszeiger ein durch den Pfeil 64 definierter Bereich aktiviert, so werden die bisher nicht dargestellten nichtgeographischen Daten dargestellt. Diese können technischer Natur oder teilnehmerbezogen sein. In Fig. 6 sind beispielhaft und ausschnittsweise die in diesem Haus befindliche elektrische Schaltungen bzw. Schaltungselemente dargestellt, die die Eigenheiten der in diesem Haus eingesetzten Technik charakterisieren. Eine Fehlersuche kann somit sogar extern erfolgen. Andererseits kann ein Techniker vor der Anfahrt an diese Adresse herausfinden, welche Ersatzteile er ggf. für eine Reparatur braucht.

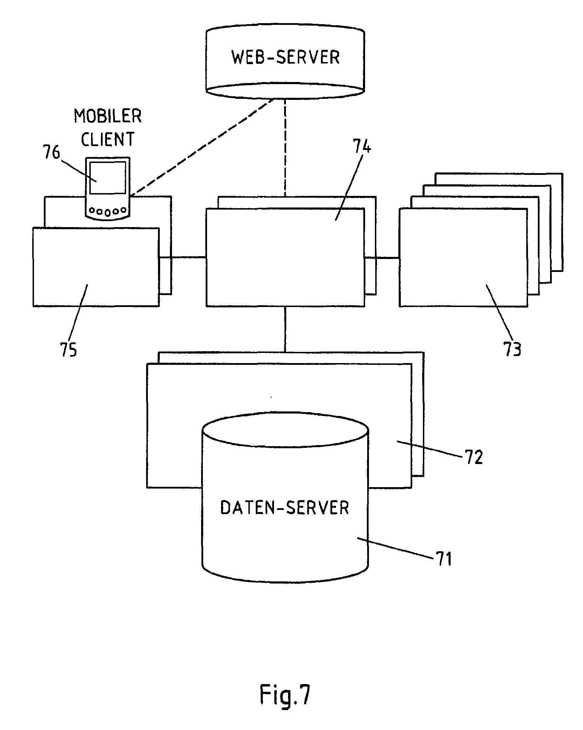

Fig. 7 zeigt schließlich ein EDV-System zur Durchführung des erfindungsgemäßen Verfahrens. Ein mit 71 gekennzeichneter Daten-Server dient der Abspeicherung und dem Zugriff auf die für die Durchführung des Verfahrens erforderlichen Daten.

Mit Blöcken 72 sind Programmteile gekennzeichnet, die einen Zugriff auf die Datenbanken des Daten-Servers 71 ermöglichen.

Die Blöcke 73 kennzeichnen die Programmteile, die eine Planung des Telekommunikationsnetzes ermöglichen. Bei der Planung werden die Daten des Datenservers verwendet bzw. werden neue Daten abgespeichert, wozu eine Datenverbindung zwischen den Programmteilen 72 und 73 besteht.

Die Blöcke 74 kennzeichnen Progammteile, die für eine graphische Darstellung verschiedener geographischer und nichtgeographischer Daten verwendet werden. Es besteht eine Datenverbindung zu den Programmteilen 72 für den Datenzugriff auf den Daten-Server 71. Ebenso besteht eine Datenverbindung zwischen den Programmteilen 73 und 74 zum graphischen Anzeigen der in Planung befindlichen Netzwerkteile.

Die Blöcke 75 stellen einen Anwendungsrechner dar, der über Datenleitungen auf die Programmteile 72 und 74 zugreift. Hierbei kann es sich um einen standortfesten Computer handeln oder über einen mobilen Clientcomputer 76, der ebenfalls über die genannten Datenlietungen mit den Programmteilen 72 und 74 verbunden ist.

Daneben ist es möglich, über einen Web-Server, also über das Internet auf die genannten Programmteile 72, 73 und/oder 74 zuzugreifen, so daß eine standortunabhängige Anwendung des erfindungsgemäßen Verfahren ermöglicht wird.

## Patentansprüche

1. Verfahren zum Darstellen von Netzdaten eines Telekommunikationsnetzes,
- bei dem aus mindestens einer Datenbank zu technischen Elementen des Telekommunikationsnetzes geographische Daten und nichtgeographische Daten ausgelesen werden,
- bei dem aus mindestens einer Datenbank teilnehmerbezogene Daten des Telekommunikationsnetzes ausgelesen werden,
- bei dem aus mindestens einer Datenbank geographische Kartendaten ausgelesen werden,
- bei dem in einer graphischen Darstellung eines Ausschnittes der geographischen Karte zumindest teilweise die geograpischen Daten und zumindest teilweise die nichtgeographischen Daten der Elemente des Telekommunikationsnetzes dargestellt werden und
- bei dem zumindest teilweise teilnehmerbezogene Daten des Telekommunikationsnetzes dargestellt werden.

2. Verfahren nach Anspruch 1,
bei dem in Abhängigkeit von Benutzereingaben ausgewählte geographische und nichtgeographische Daten dargestellt werden.

3. Verfahren nach Anspruch 1 oder 2,
bei dem in Abhängigkeit von Benutzereingaben ausgewählte teilnehmerbezogene Daten dargestellt werden.

4. Verfahren nach einem der Ansprüche 1 bis 3,
bei dem zum Auffinden des interessierenden geographischen Bereiches die Adressinformationen der Teilnehmer des Telekommunikationsnetzes ausgewertet werden, um in den Kartendaten den geeigneten Bereich herauszufinden.

5. Verfahren nach Anspruch 4,
bei dem eine Übersetzungstabelle verwendet wird, um unterschiedlich normierte Straßeninformationen zu vergleichen.

6. EDV-System zum Darstellen von Netzdaten eines Telekommunikationsnetzes zur Verwirklichung eines Verfahrens nach einem der Ansprüche 1 bis 5.

7. Computer-Programm zum Darstellen von Netzdaten eines Telekommunikationsnetzes mit Programmbefehlen für ein EDV-System zur Verwirklichung eines Verfahrens nach einem der Ansprüche 1 bis 5.

8. Computer-Programm nach Anspruch 7, gespeichert auf einem maschinenlesbaren Medium.
